(19) Europäisches Patentamt
European Patent Office
Office européen des brevets

(11) EP 2 615 136 B1

(12) **EUROPEAN PATENT SPECIFICATION**

(45) Date of publication and mention of the grant of the patent:
**16.08.2017 Bulletin 2017/33**

(51) Int Cl.:
***C08L 23/10*** *(2006.01)*

(21) Application number: **12000188.8**

(22) Date of filing: **13.01.2012**

(54) **HETEROPHASIC POLYOLEFIN COMPOSITION HAVING IMPROVED STIFFNESS AND IMPACT STRENGTH**

HETEROPHASISCHE POLYOLEFINZUSAMMENSETZUNG MIT VERBESSERTER STEIFIGKEIT UND STOSSFESTIGKEIT

COMPOSITION DE POLYOLÉFINE HÉTÉROPHASIQUE DISPOSANT D'UNE RIGIDITÉ ET D'UNE RÉSISTANCE À L'IMPACT AMÉLIORÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.07.2013 Bulletin 2013/29**

(73) Proprietor: **Borealis AG**
**1220 Vienna (AT)**

(72) Inventors:
- **Doshev, Petar**
  **4040 Linz (AT)**
- **Knall, Astrid-Caroline**
  **8055 Graz (AT)**
- **Tranninger, Cornelia**
  **4055 Pucking (AT)**

(74) Representative: **Kador & Partner**
**Corneliusstraße 15**
**80469 München (DE)**

(56) References cited:
**EP-A1- 1 391 482**
**EP-A1- 1 607 440**
**EP-A1- 2 058 340**
**EP-A1- 2 386 584**
**EP-A1- 2 423 257**
**WO-A1-2008/148695**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to a heterophasic polyolefin composition comprising a matrix comprising a propylene homo- and/or copolymer and an elastomeric alpha-olefin copolymer phase dispersed in the matrix having improved flowability and impact strength but also an excellent impact/stiffness balance. The present invention further relates to a process for the preparation of such a heterophasic polyolefin composition, articles made therefrom and uses of the heterophasic polyolefin composition.

There is an increasing trend in the food packaging industry to use plastic containers as food packing material. Typical food containers have a multilayer structure with at least one layer comprising polyolefins such as polyethylene or polypropylene, adhesives, barrier and external layers. It is desired that the polyolefin material imparts stiffness as well as high impact strength to the final packaging material. In addition, the polymers should comply with legal requirements about safety standards, e.g. FDA regulations in terms of the amount of hexane solubles.

The same trend, i.e. increased use of polyolefin materials, is seen in the medical packaging industry as well. Again, the polymer should impart sufficient stiffness as well as high impact strength to the final packaging material.

It is known that impact strength of polypropylene can be improved by dispersing a rubber phase within the polymer matrix, thereby obtaining a heterophasic polypropylene composition. Such a material is also called "impact-modified polypropylene".

EP 2 154 195 A1 relates to a heterophasic polymer composition having high seal strength after being subjected to a sterilization treatment, while simultaneously maintaining impact strength on a high level. This is achieved by using a reactive modification step.

Heterophasic polypropylene compositions for moulding applications should exhibit good flowablilty, a good impact/stiffness balance and a low level of hexane extractables. It is known that increasing the flowability (e.g. via post-reactor peroxide treatment which is also called visbreaking) usually results in an increase of hexane extractables and a decrease of the stiffness due to the oxidative degradation of the polypropylene matrix. Especially in the case of heterophasic polypropylenes having a propylene-rich elastomeric phase, peroxide treatment also affects the impact strength in a negative way by degradation of the polymer chains in the elastomeric phase.

For certain applications such as e.g. packaging or coating films, heterophasic polypropylene compositions are required to also combine high stiffness, high flowability and an excellent low temperature impact. This property combination is hard to achieve since high flowability requires small elastomer particles to avoid flow defects, but small particles are detrimental for low-temperature impact strength, since the dominant deformation mechanism at low temperatures is crazing. A solution to overcome this problem is to adapt the viscosity of the elastomeric and the matrix phase of the heterophasic polymer, requiring the elastomeric phase to have a sufficiently low molecular weight (low intrinsic viscosity, IV). Nevertheless, the impact performance of such a material at low temperatures will be rather low, due to the still small particles formed by a elastomeric phase having a low intrinsic viscosity (IV).

EP 1 607 440 A1 relates to modified polypropylene compositions, especially for automobile exterior applications comprising a heterophasic propylene copolymer, a further elastomeric copolymer and an inorganic filler. The modified composition has improved properties, where impact strength, stiffness, and elasticity are retained and surface stability is increased. This is achieved by treating the heterophasic propylene polymer composition with specific organic peroxides.

EP 1 391 482 A1 discloses (a) 99 - 90 wt% of a polypropylene composition comprising 70 - 100 wt% of a propylene homopolymer and/or a copolymer of more than 80 wt% of propylene and of up to 20 wt% of ethylene and/or a $C_4$-$C_{10}$ alpha -olefin and 0 -30 wt% of an elastomeric copolymer from 20 - 80 wt% of ethylene and 80 - 20 wt% of propylene and/or a $C_4$-$C_{10}$ alpha -olefin, where the elastomeric copolymer is discontinuously distributed within the polymer composition and which propylene polymer composition has an MFR > 10g/10 min (230 °C/2.16 kg) and (b) 1 - 10 wt% reactively modified heterophasic copolymer, preferably a reactively modified heterophasic propylene copolymer with stabilised phase morphology which has a MFR (230 °C/2.16 kg) of not more than 20 g/10 min. The polypropylene composition has an excellent stiffness/impact balance and high gloss and is particularly suitable for moulded articles, especially for household applications.

WO 2004/108773 A1 relates to a reactively modified thermoplastic elastomeric blend including at least one propylene resin and at least one ethylene/alpha-olefin/non-conjugated diene elastomer wherein the blend is dynamically vulcanized via a curing system that includes: a free radical initiator, a first co-agent including diene-containing polymers with a 1,2-vinyl content greater than about 50% by weight, and a second co-agent including multifunctional acrylates, wherein the free radical initiator and the co-agents are collectively present in an amount sufficient to provide a gel content of the elastomer of at least 97%. The thermoplastic elastomer shows increased oil resistance and decreased compression set.

There is an increasing market need for light-weight consumer packaging which can be manufactured with lower wall thicknesses, since it allows for energy and material savings. In order to provide a material equipped with these features, a highly stiff material with good impact properties needs to be developed. The high stiffness enables lower wall thicknesses of a packaging article. Furthermore, cycle time reduction is possible since a certain stiffness needed for

demoulding of the specimen is reached at shorter cooling times. However, the impact performance which determines application performance like falling weight impact strength must be maintained on a high level. Additionally, the materials should show high flowability. Otherwise, injection moulding of specimen with thin wall thickness is not possible. High flow materials generally show high stiffness due to shorter polymer chains of high stereoregularity. However, the impact performance becomes reduced due to shorter polymer chains which form less entanglements. Thus, the challenge is to obtain a material of high flowability and stiffness and good impact performance. Such propylene polymer compositions are desirably produced by a relatively simple and inexpensive process. There is particularly the need for propylene polymer compositions being suitable for thin wall packaging applications.

The present invention is based on the finding that the above object can be achieved by a heterophasic propylene polymer composition, comprising - a matrix (A) comprising a propylene homo- and/or copolymer, - an elastomeric ethylene/ alpha-olefin copolymer phase (B) dispersed in the matrix, wherein the elastomeric/ alpha-olefin phase is present in an amount of not more than 30 wt.% based on the weight of the heterophasic polymer composition, the heterophasic propylene polymer composition comprising monomer units derived from an oligomeric diene compound, and having a tensile modulus of at least 1600 MPa, measured according to ISO 527-2, a hexane extractable fraction in an amount of not more than 4 wt.%,: measured according to the method as described herein, a puncture energy determined in instrumented falling weight at 23 °C according to ISO 6603-2 of at least 15.0 J, a Charpy notched impact strength of at least 4.0 kJ/m2, determined according to ISO 179/1eA:2000 at 23 °C, and a MFR (2.16 kg, 230 °C, ISO 1133) of at least 50 g/10min. The present invention further relates to a process for the production of the above heterophasic propylene polymer composition, comprising the steps of:

(i) providing an unmodified intermediate heterophasic propylene polymer composition which comprises a matrix comprising a propylene homo- and/or copolymer, and an elastomeric ethylene/ alpha-olefin phase dispersed in the matrix; and

(ii) melt mixing the unmodified intermediate heterophasic propylene polymer composition of step (i) with a peroxide masterbatch composition and an oligomeric diene masterbatch composition in a melt mixing device at a barrel temperature in the range of 180 to 300 °C.

The term "heterophasic polyolefin composition" used herein denotes compositions consisting of an olefin polymer matrix resin and an elastomeric olefin polymer dispersed in said matrix resin.

The term "unmodified" or "intermediate heterophasic polyolefin composition" signifies a heterophasic polyolefin composition which is obtained by a polymerization reaction and which will subsequently be subjected to a post-reactor processing step as explained in the present invention.

"Catalyst" denotes the organometallic compound containing the reaction centre of the polymerisation.

"Catalyst system" denotes the mixture of the catalyst, the optional cocatalyst and the optional support.

"Visbreaking" denotes subjecting a polymer resin to peroxide treatments in the absence of a bifunctionally unsaturated molecule such as a diene.

In the present invention, the term "matrix" is to be interpreted in its commonly accepted meaning, i.e. it refers to a continuous phase (in the present invention a continuous polymer phase) in which isolated or discrete particles such as rubber particles may be dispersed. The propylene homo- or copolymer is present in such an amount that it can form a continuous phase which can act as a matrix.

The matrix phase can be made of the propylene homo- and/or copolymer only but can also comprise additional polymers, in particular polymers which can be blended homogeneously with the propylene homo- or copolymer and together form a continuous phase which can act as a matrix. In a preferred embodiment, at least 80 wt% of the matrix, more preferably at least 90 wt%, even more preferably at least 95 wt% of the matrix is made of the propylene homo- and/or copolymer. The matrix may even consist of the propylene homo- and/or copolymer. The matrix may also be made of a crystalline propylene homopolymer,

Preferably, the propylene homo- and/or copolymer constituting the matrix has a melt flow rate $MFR_2$ (230 °C, 2.16 kg) of at least 50 g/10 min, more preferably at least 55 g/10 min, and even more preferably of at least 60 g/10 min.

Preferably, the propylene homo- or copolymer constituting the matrix is made with a Ziegler-Natta catalyst.

According to one embodiment, the polypropylene constituting the matrix has a rather broad molecular weight distribution (MWD), more preferably the polypropylene is multimodal, even more preferably bimodal or trimodal. "Multimodal" or "multimodal distribution" describes a probability distribution that has several relative maxima. In particular, the expression "modality of a polymer" refers to the form of its molecular weight distribution (MWD) curve, i.e. the appearance of the graph of the polymer weight fraction as a function of its molecular weight. If the polymer is produced in a sequential step process, i.e. by utilizing reactors coupled in serial configuration, and using different conditions in each reactor, the different polymer fractions produced in the different reactors have each their own molecular weight distribution which may considerably differ from one another. The molecular weight distribution curve of the resulting final polymer can be seen as super-imposing of molecular weight distribution curves of the individual polymer fractions which will, accordingly,

show distinct maxima, or at least be distinctively broadened compared with the curves for individual fractions. A polymer showing such molecular weight distribution curve is called bimodal, trimodal or multimodal, respectively.

The polypropylene constituting the matrix can be multimodal, e.g. bimodal or trimodal. According to a specifically preferred embodiment, the polypropylene constituting the matrix is trimodal. If the polypropylene constituting the matrix is multimodal, it preferably has a molecular weight distribution (MWD) of 5 to 50, more preferably in the range of 5.5 to 25.

The propylene homo- or copolymer constituting the matrix may be produced by a single- or multistage process polymerisation of propylene or propylene with alpha-olefin and/or ethylene such as bulk polymerisation, gas phase polymerisation, solution polymerisation or combinations thereof using conventional catalysts. A homo- or copolymer can be made either in loop reactors or in a combination of loop and gas phase reactors. Those processes are well known to one skilled in the art.

A preferred multistage process is a "loop-gas phase"-process, such as developed by Borealis A/S, Denmark (known as BORSTAR® technology) described e.g. in the patent literature, such as in EP 0 887 379 or in WO 92/12182.

The heterophasic polypropylene resin according to this invention is produced preferably in a multi-stage process in a multi-stage reaction sequence. The bulk polymerisation is preferably performed in a so-called loop reactor.

Optionally, the process may also comprise a pre-polymerisation step in a manner known in the field and which may precede the first polymerisation step. The process is preferably a continuous process.

Further polymerisation process conditions are described in EP patent application No. 10 009 009.1.

In addition to the polypropylene matrix defined above, the heterophasic polymer composition of the present invention comprises an elastomeric ethylene/alpha-olefin phase dispersed in the matrix.

Thereby it is preferred that the propylene polymer matrix (A) is produced in a bulk reactor and optionally one or more gas phase reactors and afterwards transferred to a gas phase reactor in which the elastomeric copolymer phase (B) is produced in the presence of component (A).

As used in the present invention, the term "elastomeric" corresponds to the commonly accepted meaning and refers to a rubber-like polymeric material of more or less amorphous nature.

The elastomeric copolymer is dispersed within the propylene polymer matrix, i.e. it does not form a continuous phase but is rather present as separated areas distributed throughout the polypropylene constituting the matrix.

Preferably, the elastomeric ethylene/ alpha-olefin is an ethylene/propylene rubber, which may additionally comprise $C_4$-$C_{12}$ alpha-olefin monomer units.

In a preferred embodiment, the elastomeric ethylene/ alpha-olefin phase has an amount of propylene-derived monomer units of 25 to 75 wt.%, preferably 30 to 70 wt.%, more preferably 40 to 65 wt.%. The amount of co-monomer units being ethylene and/or $C_4$-$C_{12}$ alpha-olefin is 25 to 75 wt.%, preferably 30 to 70 wt.%, more preferably 35 to 60 wt.%.

More preferably, the ethylene/alpha-olefin rubber phase is an ethylene/propylene rubber, wherein the amount of ethylene-derived comonomer units is within the above ranges.

Preferably, the elastomeric ethylene/ alpha-olefin phase is present in an amount of not more than 25 wt.%, based on the weight of the heterophasic polymer composition. Preferably, said rubber phase is present in an amount within the range of 5 wt.% to 30 wt.%, more preferably 5 wt.% to 25 wt.%, even more preferably 7 wt.% to 19 wt.%, based on the weight of the heterophasic polymer composition.

In principle, the heterophasic polymer composition may additionally comprise one or more elastomeric ethylene/$C_3$-$C_{12}$ alpha-olefin phases (i.e. in total two or more ethylene/$C_3$ to $C_{12}$ alpha-olefin rubber phases) wherein at least one of these rubber phases may have less than 60 wt.%, preferably less than 50 wt.%, more preferably in the range of 10 to 50 wt.%, even more preferably in the range of 10 to 40 wt.% as in the range of 10 to 30 wt.% of $C_3$ to $C_{12}$ alpha-olefin derived monomer units.

However, if so, the total amount of $C_3$ to $C_{12}$ alpha-olefin derived monomer units in the dispersed rubber phases should still be in such a range as to result in a hexane extractable fraction of the heterophasic polymer composition which has an amount of not more than 4.0 wt.-%, preferably not more than 3.5 wt.%, even more preferably not more than 3.0 wt.%, based on the total weight of the heterophasic propylene polymer composition. The meaning of the parameter "hexane extractable fraction" will be discussed below in further detail.

The intermediate heterophasic polyolefin composition preferably has an $MFR_2$ (230 °C, 2.16 kg) of at least 30 g/10 min. More preferably, the intermediate heterophasic polyolefin composition has an $MFR_2$ (230 °C, 2.16 kg) of at least 35 g/10 min or even more preferably of at least 40 g/10 min.

The total comonomer content of the intermediate heterophasic polyolefin composition, being the sum of ethylene and $C_4$-$C_{12}$ alpha-olefin present in said composition, is not more than 10 wt.%, preferably in the range of 2 to 10 wt.%, most preferably in the range of 4 to 8 wt.%.

The intermediate heterophasic polyolefin composition can be fractionated into a p-xylene cold soluble part (XCS) mostly comprising the elastomeric ethylene/ alpha-olefin phase and a p-xylene cold insoluble part (XCI) mostly comprising the crystalline propylene homo- or copolymer constituting the matrix. In this context it is preferable if the intrinsic viscosity (IV) of the p-xylene cold soluble part (XCS) of the polymer is larger than the intrinsic viscosity (IV) of the p-xylene cold insoluble part (XCI) of the polymer.

The relative amount of the p-xylene cold soluble part (XCS) in the intermediate heterophasic polyolefin composition is preferably in the range of from 5 to 30 wt.%, preferably in the range of from 5 to 25 wt.%, more preferably in the range of from 8 to 20 wt.%.

The amount of the co-monomer units, preferably ethylene units in the p-xylene cold soluble part (XCS) is preferably in the range of from 30 to 70 wt.%, more preferably 35 to 60 wt.%, and amount of the co-monomer units, preferably ethylene units in the p-xylene cold insoluble part (XCI) is below 3.0 wt.%, preferably below 1.5 wt.%.

The fraction soluble in p-xylene (XCS) preferably consists of a propylene/alpha olefin copolymer which is largely amorphous, i.e. the crystallinity of the phase is less than 5%, preferably less than 3% with respect to analysis by wide-angle X-ray diffraction. It is particularly preferred that the XCS fraction does not exhibit $\alpha$-, $\beta$- or $\gamma$-crystalline polypropylene fractions when analyzed by wide-angle X-ray diffraction. It is further preferred that the heterophasic polypropylene does not show a melting point attributed to crystalline polyethylene in DSC below 145°C.

Modifiers and additives may be added to the polypropylene composition as occasion demands. Preferably, the modifiers are selected from poly-1-butene and poly-4-methylpentene-1. Suitable additives include stabilizers, lubricants, nucleating agents, pigments and foaming agents. These modifiers and/or additives may be included during the polymerisation process or after the polymerisation by melt mixing. It is however preferred that the modifiers do not negatively affect the desirable properties of the composition as discussed above.

If the elastomeric polymer is prepared separately from the polypropylene constituting the matrix, it can be subsequently blended with the matrix polymer by any conventional blending means, e.g. melt blending in an extruder.

Alternatively, the elastomeric ethylene/alpha olefin phase can be prepared as a reactor blend together with the propylene homo- and/or copolymer constituting the matrix, e.g. starting with the production of the matrix polymer in a loop reactor and optionally a gas phase reactor, followed by transferring the product into one or more gas phase reactors, where the elastomeric polymer is polymerised.

A suitable catalyst for the polymerisation of the heterophasic propylene polymer composition is any stereospecific catalyst for propylene polymerisation which is capable of polymerising and copolymerising propylene and comonomers at a temperature of 40 to 110 °C and at a pressure from 10 to 100 bar. Ziegler-Natta catalysts (especially a high yield Ziegler-Natta system containing Ti, Cl, Mg and Al) are suitable catalysts.

The catalyst for producing the unmodified intermediate heterophasic propylene polymer composition may be a Ziegler-Natta catalyst. If a Ziegler-Natta catalyst is used it may be e.g. an inorganic halide (e.g. $MgCl_2$) supported titanium catalyst, together with an aluminium alkyl (e.g. triethylaluminium) cocatalyst. Silanes, e.g. dicyclopentyldimethoxysilane (DCPDMS), cyclohexylmethyl-dimethoxysilane (CHMDMS) or diethylaminotriethoxysilane, may be used as external donors. Such catalyst systems are described in EP 0 491 566 A1 or in EP 0 591 224 A1. A preferred Ziegler Natta catalyst is of the type BCF20P (proprietary specification of Borealis AG) with diethylaminotriethoxysilane (donor U) or dicyclopentyldimethoxysilane (donor D) as external donor, an Al/Ti ratio (mol/mol) of 200 and an Al/donor ratio (mol/mol) of 20 or less.

The catalyst may also be a single-site catalyst (SSC), preferably an asymmetric catalyst comprising an organometallic compound of a transition metal of group 3 to 10 or the periodic table (IUPAC) or of an actinide or lanthanide. Such a catalyst system is described in EP 10 009 009.1, with respect to the description of the catalyst used for polymerising the polypropylene. The catalyst system may further comprise an activator as a cocatalyst, as described in WO 03/051934. A preferred catalyst system for preparing the heterophasic polypropylene composition of the present invention will be described in detail below.

Preferably, the heterophasic polymer composition is prepared by reactor blending in a multistep process comprising at least one loop reactor and at least one gas phase reactor. A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315. A further suitable slurry-gas phase process is the Spheripol® process of Basell.

Preferably, a dispersion of the elastomeric phase within the matrix polymer is produced by performing a further polymerization stage in the presence of particles of matrix polymer, e.g. as a further polymerization stage of a multistage polymerization. Preferably the combination of the matrix and elastomeric copolymer is produced in a multiple stage polymerization using two or more polymerization reactors, more preferably using bulk and gas phase reactors (especially fluidized bed gas phase reactors), and especially preferably using a loop reactor followed by one or more, preferably two or three gas phase reactors. In such a procedure, the catalyst system used may be varied between stages but is preferably the same for all stages. Especially preferably, a prepolymerized heterogeneous catalyst is used.

It has now surprisingly been found that a relatively simple and inexpensive process can be used for preparing the heterophasic polypropylene composition of the present invention, by processing the above-described intermediate heterophasic polyolefin composition.

Accordingly, the present invention is further concerned with a process for the production of the heterophasic polyolefin composition according to the present invention.

The process according to the present invention involves the steps of:

(i) providing an unmodified intermediate heterophasic propylene polymer composition which comprises a matrix comprising a propylene homo- and/or copolymer, and an elastomeric ethylene/ alpha-olefin phase dispersed in the matrix,

(ii) melt mixing the unmodified intermediate heterophasic propylene polymer composition of step (i) with a peroxide masterbatch composition and an oligomeric diene masterbatch composition in a melt mixing device at a barrel temperature in the range of 180 to 300 °C.

In the sense of the present invention "masterbatch" means a concentrated premix of a propylene polymer with a free radical forming agent (peroxide) or an oligomeric diene, respectively. The peroxide masterbatch composition is provided in a concentration from 0.05 to 4.0 wt.%, preferably 0.10 to 3.0 wt.%, even more preferably 0.15 to 2.7 wt.%, yet more preferably 0.30 to 2.0 wt.%, based on the total weight of the propylene polymer composition and the diene masterbatch composition is provided in a concentration from 0.1 to 15 wt.%, preferably 0.2 to 12 wt.%, even more preferably 0.3 to 10 wt.%, yet more preferably 0.4 to 5.0 wt.%, based on the total weight of the propylene polymer composition.

The peroxide compound may preferably be contained in the peroxide masterbatch composition in a range of from 5 to 50 wt.%, based on the total composition of the masterbatch. The oligomeric diene may preferably be contained in the diene masterbatch composition in a range of from 20 to 65 wt.%, based on the total composition of the masterbatch.

Preferably, the peroxide is contained in the melt mixture to be subjected to the reactive modifying step in an amount of from 0.025 to 2.0 wt.%, preferably 0.04 to 1.0 wt.%, more preferably 0,1 to 1.0 wt.% based on the total melt mixture before the start of the modifying reaction. The oligomeric diene is preferably contained in the melt mixture to be subjected to the reactive modifying step in an amount of from 0.04 to 6.5 wt.%, preferably 0.1 to 4.5 wt.%, more preferably 0.1 to 2.5 wt.%, based on the total melt mixture before the start of the modifying reaction.

According to the present invention it was found that using the above masterbatch compositions instead of adding a peroxide component and a diene component in pure form to the polypropylene resin powder in one or more pre-mixing steps prior to the melt-mixing step as conventionally done, much simpler process equipment can be employed. With the inventive masterbatch compositions any well-mixing extruder is useful and there is no need for specific sorption and/or dosing equipment as is required when adding the peroxide and diene component in pure form.

It is essential that the whole process does not involve visbreaking only, i.e. subjecting any intermediate product to peroxide treatment in the absence of a diene such as butadiene.

Suitable dienes are conjugated or non-conjugated dienes, linear or branched dienes containing 4 to 20 carbon atoms. Preferred dienes include isoprene, chloroprene, cyclohexadiene, cyclopentadiene, 2,3-dimethylbutadiene, 1,3-pentadiene, 1,4-pentadiene, 1,3-hexadiene, 1,4-heptadiene, 1,4 octadiene and butadiene. The most preferred diene is butadiene, e.g. 1,3-butadiene.

The unmodified intermediate heterophasic propylene polymer composition may be pre-mixed with the diene masterbatch composition and the peroxide masterbatch composition in a powder mixing device, like a horizontal mixer with paddle stirrer. Preferably, the diene masterbatch composition and the peroxide masterbatch composition are directly fed to the melt mixing device, e.g. an extruder and mixed with the unmodified intermediate heterophasic propylene polymer composition within the melt-mixing device.

According to a preferred embodiment of the inventive process the peroxide masterbatch composition and the diene masterbatch composition are respectively prepared by absorbing the active ingredient (peroxide or diene) into highly porous pelletized polypropylene, preferably having a void content in the range of 50 to 90% and a bulk density in the range of 40 to 350 $kg/m^3$ as determined in accordance to ISO 60 resp. DIN 53466.

The propylene polymers into which the peroxide or the oligomeric diene compound is incorporated to form the respective masterbatch composition is preferably a porous propylene polymer, more preferably a porous propylene homopolymer. According to preferred embodiments an oligomeric diene masterbatch composition may comprise 40 to 60 wt.% of a porous homopolymer and 60 to 40 wt.% of polybutadiene, such as ACCUREL® PA104 (supplier: Membrana GmbH, DE). A preferred peroxide masterbatch composition may be TRIGONOX® BPIC 37.5PP-PD (supplier: Membrana GmbH, DE) which consists of 37.5 wt.% peroxide (tert-butylperoxy isopropyl carbonate), 12.5 wt.% isododecane and 50 wt.% porous polypropylene.

The intermediate heterophasic propylene polymer composition together with the diene masterbatch composition and the peroxide masterbatch composition may then be melt-mixed at a barrel temperature of 180 to 300 °C, preferably in a continuous melt mixing device like a single screw extruder, a co-rotating twin screw extruder or a co-kneader.

The barrel temperature preferably is in the range of 180 to 280°C. More preferably a specific temperature profile is maintained along the screw of the melt-mixing device, having an initial temperature T1 in the feed zone, a maximum temperature T2 in the kneading zone and a final temperature T3 in the die zone, all temperatures being defined as barrel temperatures and fulfilling the following relation: $T1 < T3 < T2$. Barrel temperature T1 is preferably in the range of 180 to 200 °C. Barrel temperature T2 (in the kneading zone) preferably is in the range of 220 to 280 °C. Barrel temperature

T3 (in the die zone) preferably is in the range of 190 to 220 °C.

The screw speed of the melt mixing device preferably is adjusted to a range from 150 to 800 rotations per minute (rpm).

Following the melt-mixing step, the resulting polymer melt may be pelletized either in an underwater pelletizer or after solidification of one or more strands in a water bath in a strand pelletizer.

The present invention is further concerned with a heterophasic propylene polymer composition obtainable by a multistage polymerisation process in the presence of a stereospecific polymerisation catalyst, comprising the steps of:

(i) producing an unmodified intermediate heterophasic propylene polymer composition as specified above;
(ii) melt-mixing the unmodified intermediate heterophasic propylene polymer composition of step (i) with a peroxide masterbatch composition and an oligomeric diene masterbatch composition in a melt mixing device at a barrel temperature in the range of 180 to 300 °C.

The melt mixing device preferably includes a feed zone, a kneading zone and a die zone, whereby an initial barrel temperature T1 is maintained in the feed zone, a barrel temperature T2 is maintained in the kneading zone and a die barrel temperature T3 is maintained in the die zone. Preferably the barrel temperatures T1, T2, and T3 satisfy the following relation: $T1 < T3 < T2$.

Peroxides which are thermally decomposable upon the conditions of heating and melting the polymer/peroxide mixture and which meet the requirement of having a half life time t (1/2) at 110 °C of greater than 6 min and a half life time t (1/2) at 150 °C of greater than 6 min are suitable. The following organic peroxides are suitable for the above process: dibenzoyl peroxide, tert.-butyl peroxy-2-ethylhexanoate, tert.-amyl peroxy-2- ethylhexanoate, tert.-butyl peroxydiethylacetate, 1,4-di(tert.-butylperoxycarbo)cyclohexane, tert.-butyl peroxyisobutyrate, 1,1-di(tert.-butylperoxy)-3,3,5-trimethyl-cyclohexane, methyl isobutyl ketone peroxide, 2,2-di(4,4-di(tert.-butylperoxy)cyclohexyl)propane, 1,1-di(tert.-butylperoxy) cyclohexane, tert.-butyl peroxy-3,5,5-trimethylhexanoate, tert.-amylperoxy-2-ethylhexyl carbonate, 2,2-di(tert.-butylperoxy)butane, tert.-butylperoxy isopropyl carbonate, tert.-butylperoxy 2-ethylhexyl carbonate, tert.-butyl peroxyacetate, tert.-butyl peroxybenzoate, di-tert.-amyl peroxide and mixtures of these organic peroxides.

As the oligomeric diene those species are suitable which can be polymerized with the aid of free radicals, such as 1,3-butadiene, isoprene, chloroprene, cyclohexadiene, cyclopentadiene, 2,3-dimethylbutadiene, 1,3-pentadiene, 1,4-pentadiene, 1,3-hexadiene, 1,4-heptadiene, 1,4 octadiene and mixtures of these oligomeric dienes.

The dienes may preferably have a molecular weight Mn of not more than 10,000 g/mol, or not more than 5,000 g/mol or not more than 3,000 g/mol. These dienes may be synthesised from one or more low molecular weight dienes such as polybutadienes, especially where the different microstructures in the polymer chain, i. e. 1,4-cis, 1,4-trans and 1,2-vinyl are predominantly in the 1,2-vinyl configuration; or copolymers of butadiene and styrene having 1,2-vinyl in the polymer chain. The 1,2-vinyl content in the diene may preferably be in the range from 30 to 60%, preferably 35 to 55% or 45 to 55%.

Even more preferably the polypropylene composition according to the present invention is obtainable by mixing the intermediate heterophasic propylene polymer composition with 0.05 to 4.0 wt.%, preferably 0.10 to 3.0 wt.%, even more preferably 0.15 to 2.7 wt.%, yet more preferably 0.3 to 2.0 wt.%, of a masterbatch of tert-butylperoxy isopropyl carbonate (CAS No. 2372-21-6), such as TRIGONOX® BPIC 37.5PP-PD (supplier: Membrana GmbH, DE) which consists of 37.5 wt.% peroxide (tert-butylperoxy isopropyl carbonate), 12.5 wt.% isododecane and 50 wt.% porous polypropylene, and with 0.1 to 15 wt.%, preferably 0.2 to 12 wt.%, even more preferably 0.3 to 10 wt.%, yet more preferably 0.4 to 5.0 wt.%, of an oligomeric diene masterbatch composition typically comprising 40 to 60 wt.% of a porous homopolymer and 60 to 40 wt.% of polybutadiene, such as ACCUREL® PA104 (supplier: Membrana GmbH, DE).

It should be understood that the addition of the diene and the peroxide may be achieved at once in the pre-mixing stage or may be split up in two additions during said pre-mixing stage or may particularly preferably be fed directly to the melt mixing device.

It has been surprisingly found that the above-described reactive processing according to the present invention may significantly improve the flowability as well as the impact properties, especially the falling weight impact strength according to ISO 6603-2 of the final heterophasic polypropylene composition, reaching a superior impact-stiffness balance, compared to heterophasic polypropylene composition not subjected to the reactive processing according to the invention. Still further the beneficial mechanical properties, such as stiffness and tensile properties of the conventional resins can be maintained. Thus the reactively processing of the unmodified heterophasic polypropylenes achieves a unique and highly desirable property profile of the modified processed heterophasic polypropylene compositions of the present invention.

The heterophasic polyolefin composition according to the present invention has a hexane extractable fraction in an amount of not more than 4 wt.%, preferably not more than 3.5 wt.%, even more preferably not more than 3.0 wt.%. Details of the measurement method of the hexane extractable fraction are described in the example section.

The heterophasic polyolefin composition according to the present invention preferably has a Charpy notched

impact strength determined according to ISO 179/1eA:2000 at 23 °C of at least 4.0 kJ/m$^2$, preferably at least 4.5 kJ/m$^2$, even more preferably in the range of 4.0 to 20 kJ/m$^2$ and at -20 °C of at least 1.5 kJ/m$^2$, preferably at least 2.0 kJ/m$^2$, even more preferably in the range of 1.9 to 5 kJ/m$^2$.

The heterophasic polyolefin composition according to the present invention preferably has a tensile modulus of at least 1600 MPa, preferably at least 1650 MPa, even more preferably in the range of 1600 to 2000 MPa, measured according to ISO 527-2 using injection moulded test specimen as described in EN ISO 1873-2 (specimen type: 1 B (F3/4)).

The heterophasic polyolefin composition according to the present invention preferably has a puncture energy determined in the instrumented falling weight at 23 °C according to ISO 6603-2 of at least 15 J, preferably at least 18 J, even more preferably at least 20 J and a puncture energy determined in the instrumented falling at -20 °C according to ISO 6603-2 of at least 5 J, preferably at least 6 J, even more preferably at least 7 J .

The heterophasic polyolefin composition according to the present invention has a melt flow rate $MFR_2$ (230 °C, 2.16 kg) of at least 50 g/10min., preferably of at least 60 g/10min. According to some preferred embodiments of the present invention the melt flow rate $MFR_2$ may lie in the range of from 50 to 120 g/10min., more preferably in the range of from 60 to 100 g/10min.

The relative amount of the p-xylene cold soluble part (XCS) in the heterophasic polyolefin composition according to the present invention is preferably not more than 20 wt.%, more preferably in the range of from 5 to 20 wt.%, even more preferably in the range of from 5 to 15 wt.%.

The heterophasic polyolefin composition according to the present invention preferably has a melting temperature Tm in the range of 135 to 170 °C, more preferably from 140 to 167 °C and most preferably from 150 to 165 °C. High melting temperatures enable the provision of materials capable of withstanding steam sterilization. Higher melting temperatures can be achieved with polypropylene homopolymers and higher crystallinity.

Preferably the heterophasic polyolefin composition according to the present invention is obtained by a multistage polymerization process, as described above, in the presence of a catalyst system comprising as component (i) a Ziegler-Natta procatalyst which contains a transesterification product of a lower alcohol and a phthalic ester.

The procatalyst used according to the invention is preferably prepared by

a) reacting a spray crystallized or emulsion solidified adduct of $MgCl_2$ and a $C_1$-$C_2$ alcohol with $TiCl_4$
b) reacting the product of stage a) with a dialkylphthalate of formula (I)

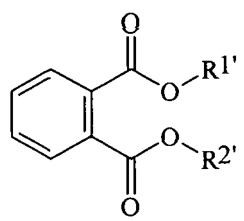
(I)

wherein R1' and R2' are independently at least a $C_5$ alkyl under conditions where a transesterification between said $C_1$ to $C_2$ alcohol and said dialkylphthalate of formula (I) takes place to form the internal donor
c) washing the product of stage b) or
d) optionally reacting the product of step c) with additional $TiCl_4$.

The procatalyst is produced as defined for example in the patent applications WO 87/07620, WO 92/19653, WO 92/19658 and EP 0 491 566.

First an adduct of $MgCl_2$ and a $C_1$-$C_2$ alcohol of the formula $MgCl_2$*nROH, wherein R is methyl or ethyl and n is 1 to 6, is formed. Ethanol is preferably used as alcohol. The adduct, which is first melted and then spray crystallized or emulsion solidified, is used as catalyst carrier.

In the next step the spray crystallized or emulsion solidified adduct of the formula $MgCl_2$*nROH, wherein R is methyl or ethyl, preferably ethyl and n is 1 to 6, is contacted with $TiCl_4$ to form a titanized carrier, followed by the steps of

- adding to said titanised carrier

  (i) a dialkylphthalate of formula (I) with R1' and R2' being independently at least a $C_5$-alkyl, like at least a $C_8$-alkyl, or preferably

  (ii) a dialkylphthalate of formula (I) with R1' and R2' being the same and being at least a $C_5$-alkyl, like at least a $C_8$-alkyl,
  or more preferably

(iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-iso-octylphthalate or diethylhexylphthalate, in particular diethylhexylphthalate,

to form a first product,

- subjecting said first product to suitable transesterification conditions, i.e. to a temperature above 100 °C, preferably between 100 to 150 °C, more preferably between 130 to 150 °C, such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II)

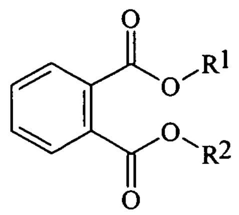

(II)

with $R^1$ and $R^2$ being methyl or ethyl, preferably ethyl,
the dialkylphthalate of formula (II) being the internal donor and

- recovering said transesterification product as the procatalyst composition (component (i)).

The adduct of the formula $MgCl_2$*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.

This crystallized adduct is preferably used as the catalyst carrier and reacted to the procatalyst useful in the present invention as described in WO 92/19658 and WO 92/19653.

As the catalyst residue is removed by extracting, an adduct of the titanised carrier and the internal donor is obtained, in which the group deriving from the ester alcohol has changed. In case sufficient titanium remains on the carrier, it will act as an active element of the procatalyst. Otherwise the titanization is repeated after the above treatment in order to ensure a sufficient titanium concentration and thus activity.

Preferably the procatalyst used according to the invention contains not more than 2.5 wt.-% of titanium, preferably not more than 2.2% wt.-% and more preferably not more than 2.0 wt.-%. Its donor content is preferably between 4 to 12 wt.-% and more preferably between 6 and 10 wt.-%.

More preferably the procatalyst used according to the invention has been produced by using ethanol as the alcohol and dioctylphthalate (DOP) as dialkylphthalate of formula (I), yielding diethyl phthalate (DEP) as the internal donor compound.

Still more preferably the catalyst used according to the invention is the BCF20P catalyst of Borealis (prepared according to WO 92/19653 as disclosed in WO 99/24479; especially with the use of dioctylphthalate as dialkylphthalate of formula (I) according to WO 92/19658) or the catalyst Polytrack® 8502, commercially available from W.R. Grace, Columbia MA, USA.

For the production of the heterophasic polyolefin composition according to the invention the catalyst system used preferably comprises in addition to the special Ziegler-Natta procatalyst an organometallic cocatalyst as component (ii).

Accordingly it is preferred to select the cocatalyst from the group consisting of trialkylaluminum, like triethylaluminum (TEA), dialkyl aluminum chloride and alkyl aluminumsesquichloride.

Component (iii) of the catalysts system used is an external donor represented by formula (IIIa) or (IIIb). Formula (IIIa) is defined by

$$Si(OCH_3)_2(R^5)_2 \qquad (IIIa)$$

wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

It is in particular preferred that $R^5$ is selected from the group consisting of iso-propyl, iso-butyl, iso-pentyl, tert.-butyl, tert.-amyl, neopentyl, cyclopentyl, cyclohexyl, methylcyclopentyl and cycloheptyl.

Formula (IIIb) is defined by

$$Si(OCH_2CH_3)_3(NR_xR_y) \quad \text{(IIIb)}$$

wherein $R_x$ and Ry can be the same or different a represent a hydrocarbon group having 1 to 12 carbon atoms.

$R_x$ and Ry are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R_x$ and Ry are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R_x$ and $R_y$ are the same, yet more preferably both $R_x$ and Ry are an ethyl group.

More preferably the external donor of formula (IIIb) is diethylaminotriethoxysilane .

Most preferably the external donor is of formula (IIIa), like dicyclopentyl dimethoxy silane [$Si(OCH_3)_2$(cyclopentyl)$_2$] or diisopropyl dimethoxy silane [$Si(OCH_3)_2(CH(CH_3)_2)_2$].

In a further embodiment, the Ziegler-Natta procatalyst can be modified by polymerising a vinyl compound in the presence of the catalyst system, comprising the special Ziegler-Natta procatalyst (component (i)), an external donor (component (iii) and optionally a cocatalyst (component (ii)), which vinyl compound has the formula:

$$CH_2=CH-CHR_3R_4$$

wherein $R_3$ and $R_4$ together form a 5- or 6-membered saturated, unsaturated or aromatic ring or independently represent an alkyl group comprising 1 to 4 carbon atoms, and the modified catalyst is used for the preparation of the heterophasic propylene copolymer according to this invention. The polymerized vinyl compound can act as an $\alpha$-nucleating agent.

Concerning the modification of catalyst reference is made to the international applications WO 99/24478, WO 99/24479 and particularly WO 00/68315, with respect to the reaction conditions concerning the modification of the catalyst as well as with respect to the polymerization reaction.

The present invention is further concerned with a moulded article comprising the processed heterophasic propylene polymer composition as described herein. The main end-uses for such moulded articles are in packaging applications like thin wall packaging for frozen or fresh food, adhesives, cosmetics or pharmaceuticals. Other end-uses are plastic containers and household articles, but also medical products, rigid packaging like detergent cartons, cup and plate boards for oven or microwave use or sterilizable food packaging, especially for deep freeze or refrigerator uses. The present invention provides the specific advantage that such articles may be produced with lower wall thicknesses without expense in the flowability of the polypropylene compositions and still having excellent impact properties. Furthermore the stiffness/impact balance of the articles produced with the polypropylene composition of the present invention is excellent.

The articles comprising the heterophasic propylene polymer composition according to the invention may be produced by any common conversion process suitable for thermoplastic polymers especially injection moulding. The present invention is also concerned with the use of the heterophasic propylene polymer composition according to the present invention for any common conversion process suitable for thermoplastic polymers like injection moulding.

## Examples

### 1. Methods

#### a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg. It is also designated in this application as "$MFR_2$"

#### b) Hexane extractable content

Hexane extractables were determined according to the following procedure. 1 g of the sample was put into a 300 ml Erlenmeyer flask and 100 ml of hexane was added. The mixture was boiled under stirring in a reflux condenser for 4 hours. The hot solution was filtered through a folded filter paper and dried (in a vacuum oven at 90 °C) and weighted (0.0001 g exactly) in a round shenk. The Erlenmeyer flask and the filter were washed with n-hexane. Then the hexane was evaporated under a nitrogen stream on a rotary evaporator. The round shenk was dried in a vacuum oven at 90°C over night and was put into a desiccator for at least 2 hours to cool down. The shenk was weighted again and the hexane

soluble was calculated therefrom.

**c) Intrinsic viscosity**

The intrinsic viscosity (IV) value increases with the molecular weight of a polymer. The intrinsic viscosity of the XCU (p-xylene cold insoluble fraction) and the XCS (p-xylene cold soluble fraction) is measured in decalin at 135°C according to DIN EN ISO 1628-1 and -3.

**d) p-Xylene cold soluble content**

The p-xylene cold soluble content (XCS) of the tested polymer compositions was determined according to ISO 6427 at 23 °C.

The amorphous content (AM) is measured by separating the above obtained p-xylene cold soluble fraction (XCS) and precipitating the amorphous part with acetone. The precipitate was filtered and dried in a vacuum oven at 90 °C.

$$AM\% = \frac{100 \, x \, m1 \, x \, v0}{m0 \, x \, v1}$$

wherein

AM% is the amorphous fraction;
m0 is the initial polymer amount (g);
m1 is the weight of the precipitate (g);
v0 is the initial volume (ml);
v1 is the volume of the analyzed sample (ml).

The fraction insoluble in p-xylene at 23°C (XCU) is then equal to 100% - XCS%.

**e) Comonomer content by FTIR spectroscopy**

The comonomer content is determined by quantitative Fourier transform infrared spectroscopy (FTIR) after basic assignment calibrated via quantitative $^{13}C$ nuclear magnetic resonance (NMR) spectroscopy in a manner well known in the art. Thin films are pressed to a thickness of between 100-500 μm and spectra recorded in transmission mode.

Specifically, the ethylene content of a polypropylene-co-ethylene copolymer is determined using the baseline corrected peak area of the quantitative bands found at 720-722 and 730-733 $cm^{-1}$. Specifically, the butene or hexene content of a polyethylene copolymer is determined using the baseline corrected peak area of the quantitative bands found at 1377-1379 $cm^{-1}$. Quantitative results are obtained based upon reference to the film thickness.

**f) Charpy notched impact Strength (NIS)**

Charpy notched impact strength was determined according to ISO 179-1eA:2000 at 23 °C, and at -20 °C by using injection moulded test specimens (V-notched samples) as described in EN ISO 1873-2 (80 x 10 x 4 mm).

**g) Instrumented falling weight test**

Puncture energy, maximum force and puncture deflection is determined in the instrumented falling weight test according to ISO 6603-2 using injection moulded plaques of 60x60x2 mm and a test speed of 4.4 m/s. The reported puncture energy results from an integral of the failure energy curve measured at +23°C and -20°C.

**h) Tensile properties**

Tensile properties were determined according to ISO 527-2. Compression moulded specimens of type 1A were used, which were prepared according to EN ISO 1873-2 (specimen type: 1B (F3/4)).

Tensile modulus (in MPa) was determined according to ISO 527-2. The measurement was conducted at 23 °C with an elongation rate of 1 mm/min.

For determining tensile stress at break (in MPa) and tensile strain at break (in %) the aforementioned tensile test according to ISO 527-2 at +23 °C was continued with an elongation rate of 50 mm/min until the specimen broke.

**i) Melting Temperature**

Melting temperature ($T_m$) was measured with a Mettler TA820 differential scanning calorimetry (DSC) apparatus on 5 to 10 mg samples. DSC was performed according to ISO 3146 (part 3, method C2) in a heat/cool/heat cycle with a scan rate of 10 °C/min in the temperature range of +23 to +210 °C. Melting temperature was determined from the second heating step.

**j) Gel Permeation Chromatography (GPC)**

Number average molecular weight ($M_n$), weight average molecular weight ($M_w$) and molecular weight distribution (MWD) are determined by Gel Permeation Chromatography (GPC) according to the following method:

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/l 2,6-di-tert. butyl-4-methyl-phenol) as solvent at 145 °C and at a constant flow rate of 1 ml/min. 216.5 μl of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5 - 10 mg of polymer in 10 ml (at 160 °C) of stabilized trichlorobenzene (TCB) (same as mobile phase) and keeping for 3 hours with continuous shaking prior to sampling into the GPC instrument.

**k) Bulk density**

The bulk density of the highly porous polypropylene carrier was determined according to ISO 60:1997.

**2. Compositions:**

The base resin according to CE1 was a commercial heterophasic polypropylene (Bormod® BJ368MO, proprietary to Borealis AG, Wien, Austria). It was prepared using a BCF20P catalyst using the BNT nucleation system (Borealis Nucleation Technology). The propylene homopolymer matrix had a MFR (230 °C, 2.16 kg load) of 160 g/10 min. and the disperse phase amounted to 20 wt-%, based on the total weight of the composition. The total ethylene content in the composition was 8 wt.-%.

Two base resins (heterophasic polymer compositions), CE2 and CE4, were prepared in a Borstar™ pilot plant using one liquid-phase loop reactor and three gas phase reactors. The catalyst used in the polymerization was prepared according to WO 92/19653 with DOP as dialkylphthalate of the formula (I) given above and ethanol as alcohol, in combination with co-catalyst triethylaluminum (TEA). In case of CE2 dicyclopentyl dimethoxy silane (donor D) at a ratio Al/donor of 15 (mol/mol) and in case of CE4 diethylaminotriethoxysilane (donor U) at a ratio Al/donor of 10 (mol/mol) was used as external donor.

As the matrix phase for the above two base resins, a trimodal propylene homopolymer with a MFR (230 °C, 2.16 kg) of 78 and 140 g/10min (matrix MFR) was used, respectively. The dispersed phase (EPR) is of monomodal design in terms of comonomer content and molecular weight. The comonomer (ethylene) content in the elastomeric (EPR) phase was 40 wt% and 39 wt%, respectively. Details of production and analysis can be found in Table 1.

## Table 1

| | | CE2 | CE4 |
|---|---|---|---|
| loop | Catalyst | BCF20P BNT | BCF20P BNT |
| | Donor type | D | U |
| | Al/donor ratio (mol/mol) | 15 | 10 |
| | $MFR_2$ (g/10min) | 240 | 400 |
| | amount made in loop (%) | 37 | 36 |
| | XCS (%) | 1.8 | 4.3 |
| GPR1 | $MFR_2$ (g/10 min) | 160 | 210 |
| | $MFR_2$ made in GPR1 | 100 | 110 |
| | amount made in GPR1 (%) | 31 | 36 |
| | XCS (%) | 1.8 | 2.9 |
| GPR2 | $MFR_2$ (g/10 min) (matrix MFR) | 78 | 140 |
| | $MFR_2$ made in GPR2 | 6.1 | 30 |
| | amount made in GPR2 (%) | 22 | 19 |
| | XCS (%) | 1.7 | 3.6 |
| GPR3 | Ethene content (%) | 5.4 | 7.1 |
| | XCS (%) | 11.8 | 14.6 |
| | $MFR_2$ (g/10 min) | 47 | 70 |
| | amount made in GPR3 | 10.1 | 9 |
| | $C_2/C_3$ ratio (mol/kmol) | 500 | 340 |
| | $H_2/C_2$ ratio (mol/kmol) | 90 | 77 |
| product | $MFR_2$ (g/10 min) | 47 | 70 |
| | XCS (%) | 11.8 | 14.6 |
| | AM (%) | 10.2 | - |
| | ethene of AM (%) | 40 | 39 |
| | IV of AM (dl/g) (LINZ) | 3.1 | 3.1 |
| | ethene content (%) | 5.4 | 7.1 |

The heterophasic polypropylene composition obtained according to CE2 was subjected to a post-reactor reactive processing by using a diene masterbatch composition and a peroxide masterbatch composition (inventive examples) as detailed below so that the inventive composition E1 was obtained. The polymers produced according to CE2 and CE4 were not subjected to a post-reactor processing step, whereas CE3 was obtained by visbreaking the composition according to CE2 in a post-reactor treatment using 1.5 wt.% of a conventional visbreaking peroxide masterbatch (1 wt.% of 2,5-dimethyl-2,5-di(tert-butylperoxy)hexane (CAS no. 78-63-7 on PP-random, DHBP-1-IC5, United Initiators). No diene coupling agent was used.

The oligomeric diene masterbatch composition used was ACCUREL® PA104 (supplier: Membrana GmbH, DE) based on the highly porous polypropylene homopolymer carrier ACCUREL® XP100-84 (supplier: Membrana GmbH, DE) having a void content of 83 % and a bulk density of 95 kg/m$^3$. The peroxide masterbatch composition used was TRIGONOX® BPIC 37.5PP-PD (supplier: Membrana GmbH, DE) based on the highly porous polypropylene homopolymer carrier ACCUREL® MP100 (supplier: Membrana GmbH, DE) having a void content of 78 % and a bulk density of 130 kg/m$^3$. The peroxide masterbatch was used in a concentration of 1 wt%, based on the total weight of the melt-mixture, the butadiene masterbatch was used in a concentration of 0.5 wt%, based on the total weight of the melt-mixture.

Both the butadiene masterbatch and the peroxide masterbatch were injected into the polymer melt in the extruder in a twin screw extruder ZSK18 (Coperion GmbH, Germany) having a barrel diameter of 18 mm and an L/D-ratio of 40 equipped with a high intensity mixing screw having three kneading zones and a two-step degassing setup.

A temperature setting: 180/180/190/220/220/210/210 °C was used with a melt temperature of 215 °C. The screw speed was set at 300 rpm. Following the melt-mixing step, the resulting polymer melt was pelletized in an underwater pelletizer or after solidification of one or more strands in a waterbath in a strand pelletizer at a water temperature of 40°C. The throughput was 7 kg/h.

Physical and mechanical properties of the inventive example (E1) and the comparative examples (CE1-CE4) are summarized in Table 2.

**Table 2**

| | | CE1 BJ368MO | CE2 | CE3 CE2-VB | CE4 | E1 CE2-RM |
|---|---|---|---|---|---|---|
| **MFR** | $MFR_2$ (g/10 min.) | 70 | 49 | 69 | 70 | 65 |
| **Extraction** | XCS (wt.%) | 17 | 12.1 | 12.0 | 15 | 11.5 |
| | XCU (wt.%) | 83 | 87.9 | 88.0 | 85 | 88.5 |
| | IV of XCS (dl/g) | 2.2 | 3.2 | 3.0 | 3.1 | 3.0 |
| | HEXANE EXTRACTABLE FRACTION (wt.%) | 3.6 | 3.1 | 3.1 | 3.3 | 2.8 |
| **tensile testing** | TENSILE MODULUS (MPa) | 1450 | 1776 | 1698 | 1615 | 1701 |
| | TENSILE STRENGTH (MPa) | 26 | 31 | 30 | 28 | 30 |
| | TENSILE STRAIN AT TENSILE STRENGTH (%) | 3.0 | 4.0 | 4.0 | 3.0 | 3.9 |
| **NIS (23°C)** | IMPACT STRENGTH ($kJ/m^2$) | 4.2 | 3.8 | 3.4 | 3.2 | 5.6 |
| **NIS (-20 °C)** | IMPACT STRENGTH ($kJ/m^2$) | 2.2 | 1.9 | 2.0 | 2.0 | 2.3 |
| **instumented falling weight (23 °C)** | MAXIMUM FORCE (N) | 2318 | 2438 | 2508 | 1187 | 2353 |
| | PUNCTURE DEFLECTION (mm) | 15.0 | 10.9 | 10.2 | 6.2 | 15.7 |
| | PUNCTURE ENERGY (J) | 22.0 | 14.5 | 11.8 | 3.5 | 23.5 |
| **instumented falling weight (-20 °C)** | MAXIMUM FORCE (N) | 2505 | 2580 | 2600 | 572 | 2427 |
| | PUNCTURE DEFLECTION (mm) | 7.0 | 6.9 | 6.2 | 3.1 | 7.0 |
| | PUNCTURE ENERGY (J) | 9.0 | 8.0 | 7.3 | 1.0 | 7.9 |

From the above results it can be seen that the composition of the invention using a polypropylene which is the unmodified intermediate composition of CE2 but subjected to the post-reactor modification step, showed improved flowability (higher product MFR) and sharply increased Charpy notched impact strength at 23 °C and -20 °C, while the tensile properties and the falling weight impact strength could be maintained at a desirably high level.

CE1 is a commercial high flowability, high impact strength heterophasic polypropylene (Bormod® BJ368MO, proprietary to Borealis AG, Wien, Austria). The material has a comparable good flowability and impact strength like the composition of the invention, E1. On the other hand, E1 offers a drastically increased tensile modulus, thus achieving an improved impact-stiffness balance which makes the inventive composition especially suitable for thin wall applications such as storage containers, e.g. for deep freeze and refrigerator use.

CE 3 uses the same reactor-made polypropylene composition as CE2 and E1, but was subjected to a conventional post-reactor peroxide treatment (visbreaking). It is evident that the Charpy notched impact strength of the material of CE3 was inferior due to the visbreaking step.

CE 4 uses a high flowablitity trimodal heterophasic polypropylene composition which has a rather high matrix $MFR_2$ of 140 g/10 min. (Table 1) but was not subjected to the post-reactor modification step of the invention. Its impact properties as well as tensile properties are inferior to the inventive composition E1.

As can be seen from Table 2 the concept of post-reactor modification can also be applied to heterophasic polypropylene (impact polypropylene) to achieve improved flowability and impact strength combined with an excellent impact-stiffness balance. Therefore the specific property combination of the inventive heterophasic propylene polymer compositions is not achievable by conventional heterophasic propylene polymer compositions not subjected to the post-reactor treatment of the present invention.

## Claims

1. A heterophasic propylene polymer composition, comprising

- a matrix (A) comprising a propylene homo- and/or copolymer,
- an elastomeric ethylene/alpha-olefin copolymer phase (B) dispersed in the matrix, wherein the elastomeric/alpha-olefin phase is present in an amount of not more than 30 wt.% based on the weight of the heterophasic polymer composition,

the heterophasic propylene polymer composition comprising monomer units derived from an oligomeric diene compound, and
having a tensile modulus of at least 1600 MPa, measured according to ISO 527-2,
a hexane extractable fraction in an amount of not more than 4 wt.%, measured according to the method as described herein,
a puncture energy determined in instrumented falling weight at 23 °C according to ISO 6603-2 of at least 15.0 J,
a Charpy notched impact strength of at least 4.0 kJ/$m^2$, determined according to ISO 179/1eA:2000 at 23 °C, and
a MFR (2.16 kg, 230 °C, ISO 1133) of at least 50 g/10min.

2. Heterophasic propylene polymer composition according to claim 1, wherein the matrix (A) has a MFR (2.16 kg, 230 °C, ISO 1133) of at least 50 g/10 min.

3. Heterophasic propylene polymer composition according to any one of the preceding claims having a puncture energy determined in instrumented falling weight at -20 °C according to ISO 6603-2 of at least 5 J.

4. Process for the production of a heterophasic propylene polymer composition according to any of the preceding claims, comprising the steps of:

(i) providing an unmodified intermediate heterophasic propylene polymer composition which comprises a matrix comprising a propylene homo- and/or copolymer, and an elastomeric ethylene/alpha-olefin phase dispersed in the matrix; and
(ii) melt mixing the unmodified intermediate heterophasic propylene polymer composition of step (i) with a peroxide masterbatch composition and an oligomeric diene masterbatclh composition in a melt mixing device at a barrel temperature in the range of 180 to 300 °C.

5. Process according to claim 4, wherein the unmodified intermediate heterophasic propylene composition has a MFR (2.16 kg, 230°C, ISO 1133) of at least 30 g/10min.

6. Process according to claim 4 or 5, wherein the melt mixing device includes a feed zone, a kneading zone and a die zone, whereby an initial barrel temperature T1 is maintained in the feed zone, a barrel temperature T2 is maintained in the kneading zone and a die barrel temperature T3 is maintained in the die zone, whereby the barrel temperatures T1, T2, and T3 satisfy the following relation:

$$T1 < T3 < T2.$$

7. Process according to any one of claims 4 to 6, wherein the peroxide masterbatch composition is added in step (ii) in an amount of 0.05 to 4.0 wt.%, based on the total heterophasic propylene polymer composition.

8. Process according to claim 7, wherein the peroxide is contained in the melt mixture to be subjected to the reactive modifying step in an amount of from 0.025 to 2 wt.%, based on the total melt mixture before the start of the modifying reaction.

9. Process according to any one of claims 4 to 8 wherein the oligomeric diene masterbatch composition is added in step (ii) in an amount 0.1 to 15 wt.%, based on the total heterophasic propylene polymer composition.

10. Process according to claim 9, wherein the oligomeric diene is contained in the melt mixture to be subjected to the reactive modifying step in an amount of from 0.04 to 6.5 wt.%, based on then total melt mixture before the start of

the modifying reaction.

**11.** Article comprising the heterophasic propylene polymer composition according to any of claims 1 to 3.

**12.** Article according to claim 11 which is an injection moulded article.

**13.** Use of a heterophasic propylene polymer composition as defined in any of claims 1 to 3 for injection moulding.

**Patentansprüche**

**1.** Heterophasische Propylenpolymerzusammensetzung, umfassend

- eine Matrix (A), die ein Propylenhomo- und/oder -copolymer umfasst,
- eine elastomere Ethylen/alpha-Olefin-Copolymerphase (B), die in der Matrix dispergiert ist, wobei die elastomere Ethylen/alpha-Olefin-Phase mit einer Menge von nicht mehr als 30 Gew.-%, basierend auf dem Gewicht der heterophasischen Polymerzusammensetzung, vorliegt,

wobei die heterophasische Propylenpolymerzusammensetzung Monomereinheiten umfasst, die sich von einer oligomeren Dienverbindung ableiten, und
einen Zugmodul von mindestens 1600 MPa aufweist, gemessen gemäß ISO 527-2,
eine hexanextrahierbare Fraktion mit einer Menge von nicht mehr als 4 Gew.-% aufweist, gemäß dem hier beschriebenen Verfahren,
eine Durchstoßenergie von mindestens 15,0 J aufweist, bestimmt in einem instrumentierten Fallgewichtstests bei 23 °C gemäß ISO 6603-2,
eine Charpy-Kerbschlagzähigkeit von mindestens 4,0 $kJ/m^2$ aufweist, gemessen gemäß ISO 179/1eA: 2000 bei 23 °C, und
einen MFR(2,16kg, 230 °C, ISO 1133) von mindestens 50 g/10min aufweist.

**2.** Heterophasische Propylenpolymerzusammensetzung nach Anspruch 1, wobei die Matrix (A) einen MFR(2,16kg, 230 °C, ISO 1133) von mindestens 50 g/10 min aufweist.

**3.** Heterophasische Propylenpolymerzusammensetzung nach einem der vorhergehenden Ansprüche, die eine Durchstoßenergie von mindestens 5 J aufweist, bestimmt in einem instrumentierten Fallgewichtstests bei -20 °C gemäß ISO 6603-2.

**4.** Verfahren für die Herstellung von einer heterophasischen Propylenpolymerzusammensetzung nach einem der vorhergehenden Ansprüche, das die folgenden Schritte umfasst:

(i) Bereitstellen von einer nicht-modifizierten heterophasischen Propylenpolymerzwischenzusammensetzung, die eine Matrix, welche ein Propylenhomo- und/oder -copolymer umfasst, und eine elastomere Ethylen/alpha-Olefin-Phase, die in der Matrix dispergiert ist, umfasst; und
(ii) Schmelzmischen von der nicht-modifizierten heterophasischen Propylenpolymerzwischenzusammensetzung aus dem Schritt (i) mit einer Peroxid-Masterbatchzusammensetzung und einer oligomeren Dien-Masterbatchzusammensetzung in einer Schmelzmischvorrichtung bei einer Zylindertemperatur in dem Bereich von 180 bis 300 °C.

**5.** Verfahren nach Anspruch 4, wobei die nicht-modifizierte heterophasische Propylenpolymerzwischenzusammensetzung einen MFR(2,16 kg, 230 °C, ISO 1133) von mindestens 30 g/10 min aufweist.

**6.** Verfahren nach Anspruch 4 oder 5, wobei die Schmelzmischvorrichtung eine Zufuhrzone, eine Knetzone und eine Düsenzone umfasst, wobei eine anfängliche Zylindertemperatur T1 in der Zufuhrzone aufrechterhalten wird, eine Zylindertemperatur T2 in der Knetzone aufrechterhalten wird und eine Düsenzylindertemperatur T3 in der Düsenzone aufrechterhalten wird, wobei die Zylindertemperaturen T1, T2 und T3 die folgende Beziehung erfüllen:

$$T1 < T3 < T2.$$

7. Verfahren nach einem der Ansprüche 4 bis 6, wobei die Peroxid-Masterbatchzusammensetzung in dem Schritt (ii) mit einer Menge von 0,05 bis 4,0 Gew.-% zugegeben wird, basierend auf der gesamten heterophasischen Propylenpolymerzusammensetzung.

8. Verfahren nach Anspruch 7, wobei das Peroxid in der Schmelzmischung, die dem reaktiven Modifizierungsschritt unterworfen wird, mit einer Menge von 0,025 bis 2 Gew.-% enthalten ist, basierend auf der gesamten Schmelzmischung vor dem Beginn der Modifizierungsreaktion.

9. Verfahren nach einem der Ansprüche 4 bis 8, wobei die oligomere Dien-Masterbatchzusammensetzung in dem Schritt (ii) mit einer Menge von 0,1 bis 15 Gew.-% zugegeben wird, basierend auf der gesamten heterophasischen Propylenpolymerzusammensetzung.

10. Verfahren nach Anspruch 9, wobei das oligomere Dien in der Schmelzmischung, die dem reaktiven Modifizierungsschritt unterworfen wird, mit einer Menge von 0,04 bis 6,5 Gew.-% enthalten ist, basierend auf der gesamten Schmelzmischung vor dem Beginn der Modifizierungsreaktion.

11. Artikel, umfassend die heterophasische Propylenpolymerzusammensetzung nach einem der Ansprüche 1 bis 3.

12. Artikel nach Anspruch 11, der ein Spritzgussartikel ist.

13. Verwendung von einer heterophasischen Propylenpolymerzusammensetzung nach einem der Ansprüche 1 bis 3 zum Spritzgießen.

## Revendications

1. Composition de polymère de propylène hétérophasique comprenant :

   - une matrice (A) comprenant un homo- et/ou co-polymère de propylène,
   - une phase de copolymère d'alpha-oléfine/éthylène élastomère (B) dispersée dans la matrice, laquelle phase d'alpha-oléfine/élastomère est présente en une quantité ne dépassant pas 30 % en poids par rapport au poids de la composition de polymère hétérophasique,

   laquelle composition de polymère de propylène hétérophasique comprend des motifs monomères dérivés d'un composé diène oligomère, et
   a un module en traction, mesuré conformément à la norme ISO 527-2, d'au moins 1600 MPa,
   une fraction extractible dans l'hexane, mesurée conformément au procédé tel que décrit ici, en une quantité ne dépassant pas 4 % en poids,
   une énergie de perforation, déterminée par une masse tombante instrumentée à 23°C conformément à la norme ISO 6603-2, d'au moins 15,0 J,
   une résistance au choc sur barreau entaillé Charpy, déterminée conformément à la norme ISO 179/1eA:2000 à 23°C, d'au moins 4,0 kJ/$m^2$, et
   un MFR (2,16 kg, 230°C, ISO 1133) d'au moins 50 g/10 min.

2. Composition de polymère de propylène hétérophasique selon la revendication 1, dans laquelle la matrice (A) a un MFR (2,16 kg, 230°C, ISO 1133) d'au moins 50 g/10 min.

3. Composition de polymère de propylène hétérophasique selon l'une quelconque des revendications précédentes, ayant une énergie de perforation, déterminée par une masse tombante instrumentée à -20°C conformément à la norme ISO 6603-2, d'au moins 5 J.

4. Procédé pour la production d'une composition de polymère de propylène hétérophasique selon l'une quelconque des revendications précédentes, comprenant les étapes consistant à :

   (i) disposer d'une composition de polymère de propylène hétérophasique intermédiaire non modifiée qui comprend une matrice comprenant un homo- et/ou co-polymère de propylène, et une phase d'alpha-oléfine/éthylène élastomère dispersée dans la matrice ; et
   (ii) mélanger à l'état fondu la composition de polymère de propylène hétérophasique intermédiaire non modifiée

de l'étape (i) avec une composition de mélange maître de peroxyde et une composition de mélange maître de diène oligomère dans un dispositif de mélange à l'état fondu à une température de fût située dans la plage allant de 180 à 300°C.

**5.** Procédé selon la revendication 4, dans lequel la composition de propylène hétérophasique intermédiaire non modifiée a un MFR (2,16 kg, 230°C, ISO 1133) d'au moins 30 g/10 min.

**6.** Procédé selon la revendication 4 ou 5, dans lequel le dispositif de mélange à l'état fondu comprend une zone d'alimentation, une zone de malaxage et une zone de filière, où une température de fût initiale T1 est maintenue dans la zone d'alimentation, une température de fût T2 est maintenue dans la zone de malaxage et une température de fût au niveau de la filière T3 est maintenue dans la zone de filière, les températures de fût T1, T2 et T3 satisfaisant à la relation suivante :

$$T1 < T3 < T2.$$

**7.** Procédé selon l'une quelconque des revendications 4 à 6, dans lequel la composition de mélange maître de peroxyde est ajoutée dans l'étape (ii) en une quantité de 0,05 à 4,0 % en poids par rapport à la composition de polymère de propylène hétérophasique totale.

**8.** Procédé selon la revendication 7, dans lequel le peroxyde est contenu dans le mélange fondu devant être soumis à l'étape de modification réactive en une quantité de 0,025 à 2 % en poids par rapport au mélange fondu total avant le début de la réaction de modification.

**9.** Procédé selon l'une quelconque des revendications 4 à 8, dans lequel la composition de mélange maître de diène oligomère est ajoutée dans l'étape (ii) en une quantité de 0,1 à 15 % en poids par rapport à la composition de polymère de propylène hétérophasique totale.

**10.** Procédé selon la revendication 9, dans lequel le diène oligomère est contenu dans le mélange fondu devant être soumis à l'étape de modification réactive en une quantité de 0,04 à 6,5 % en poids par rapport au mélange fondu total avant le début de la réaction de modification.

**11.** Article comprenant la composition de polymère de propylène hétérophasique selon l'une quelconque des revendications 1 à 3.

**12.** Article selon la revendication 11, qui est un article moulé par injection.

**13.** Utilisation d'une composition de polymère de propylène hétérophasique telle que définie dans l'une quelconque des revendications 1 à 3 pour un moulage par injection.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2154195 A1
- EP 1607440 A1
- EP 1391482 A1
- WO 2004108773 A1
- EP 0887379 A
- WO 9212182 A
- EP 10009009 A
- EP 0491566 A1
- EP 0591224 A1
- WO 03051934 A
- WO 2004000899 A
- WO 2004111095 A
- WO 9924478 A
- WO 9924479 A
- WO 0068315 A
- WO 8707620 A
- WO 9219653 A
- WO 9219658 A
- EP 0491566 A